Europäisches Patentamt

European Patent Office

Office européen des brevets

(11) Publication number: **0 207 298**
**B1**

## EUROPEAN PATENT SPECIFICATION

(45) Date of publication of the patent specification:
**13.06.90**

(51) Int. Cl.⁵: **H02P 8/00, H02K 37/00**

(21) Application number: **86107371.6**

(22) Date of filing: **28.09.83**

(60) Publication number of the earlier application in accordance with Art. 76 EPC: **0106595**

(54) Stepper motor.

(30) Priority: **28.09.82 US 426188**

(43) Date of publication of application:
**07.01.87 Bulletin 87/2**

(45) Publication of the grant of the patent:
**13.06.90 Bulletin 90/24**

(84) Designated Contracting States:
**AT BE CH DE FR GB IT LI LU NL SE**

(56) References cited:
**AT-A- 235 404**
**DE-B- 1 613 083**
**US-A- 3 909 684**
**US-A- 4 580 087**

(73) Proprietor: **Yang, Tai-Her, 5-1 Tay Pyng St., Shi Hwu Jenn Jang Huah Shiann(TW)**

(72) Inventor: **Yang, Tai-Her, 5-1 Tay Pyng St., Shi Hwu Jenn Jang Huah Shiann(TW)**

(74) Representative: **Arthur, Bryan Edward et al, Withers & Rogers 4 Dyer's Buildings Holborn, London EC1N 2JT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to stepper motors. This application is divided out on European Patent application 83305856.3, publication number 0106595.

Stepper motors are normally operated from pulsed DC supplies. The invention, which is defined in the claims appended hereto, provides a novel form of stepper motor capable of operation from an A.C. supply.

The invention, which is defined in the appended claims, will be described with reference to the accompanying drawings, in which:

Figure 1 shows a stepper motor which may be driven by A.C.

1-1 Output axle.
1-2 Outer case.
1-3 Bearing.
1-4 Stator iron core.
1-5 Stator winding.
1-6 Rotor iron core.
1-7 Rotor winding.
1-8 Rotor slip ring.
1-9 Rotor brushes.
1-10 The insulating holder of rotor slip ring.

Figure 2 shows the series connection diagram between the stator and rotor windings of motor in Figure 1 and the control switch.

Figure 3 shows the truth table of the motor operation in Figure 1.

Figure 4 shows a different embodiment.

4-1 Output axle.
4-2 Input slip ring of rotor.
4-3 Input brush of rotor.
4-4 Brush holder.
4-5 The tooth-shaped iron core of rotor.
4-6 Rotor winding.

Figures 5 and 6 are alternative circuits.

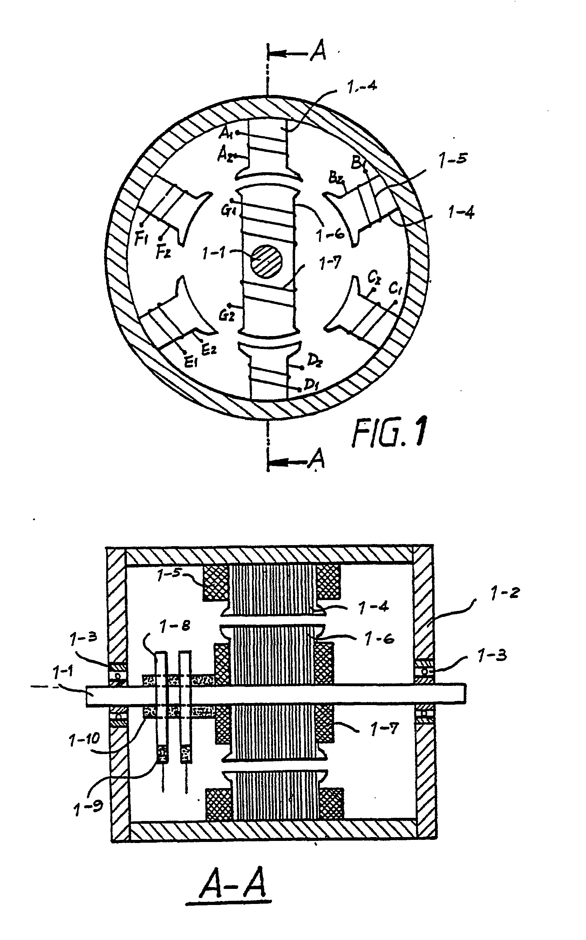

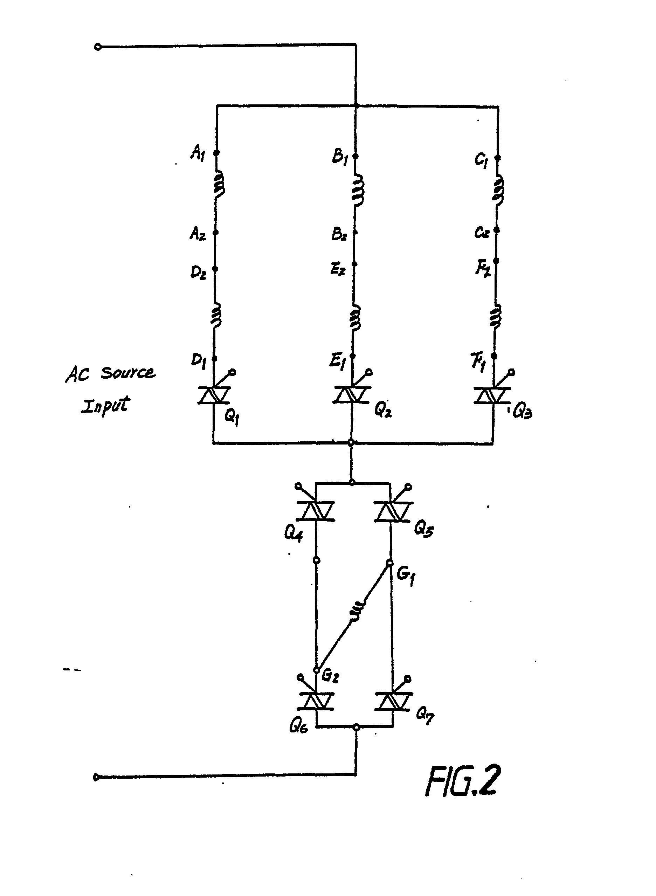

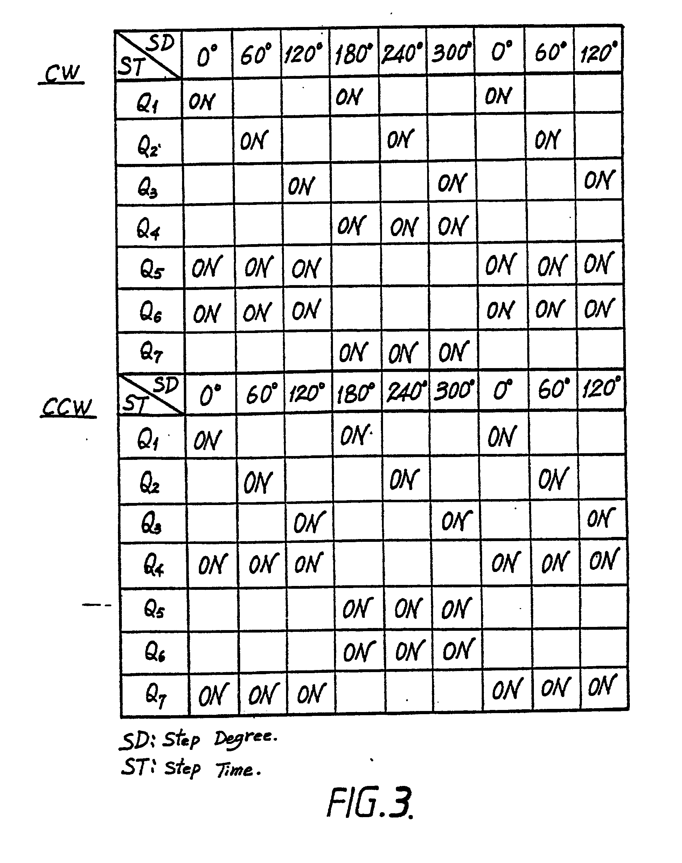

The motor of Figure 1 is an AC and DC series repulsion stepper motor in which the polarity relations of AC or DC power applied to stator (1-4) and rotor (1-6) generate a servo-step function. The major difference between the design in this invention and the conventional DC stepper motor is that the exciting AC or DC power of the rotor (1-6) in this invention is delivered through the slip ring (1-8), and the rotor exciting winding is connected with the stator winding (1-5) in series (shown in Figure 2 through the step-drive polarity commutation switch).

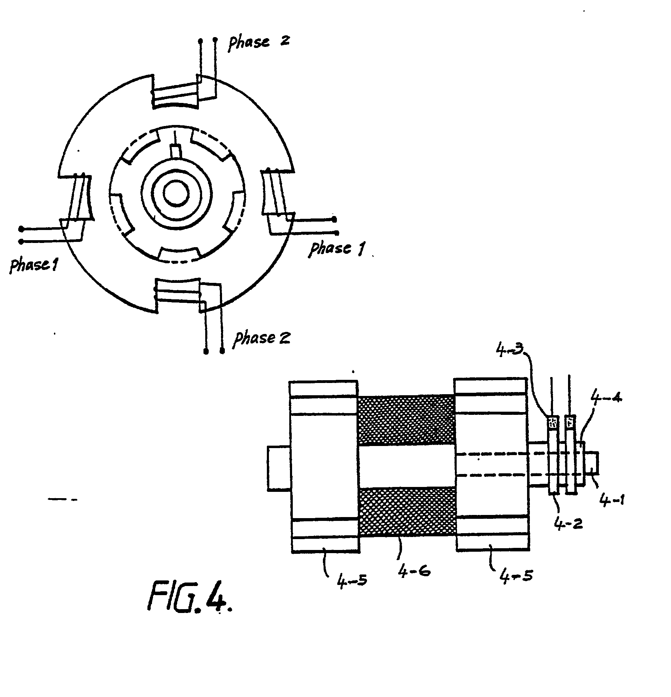

Thus, the polarity relation of the stator and the rotor connected in series may be varied together with the power supply without affecting the attraction effect between the poles. Moreover, the polarity relation may be varied by sequentially commutating the stator winding (1-5) and by applying AC or DC power through the polarity sequence commutation switch connected in series between the stator and the rotor. The truth table of this commutation is shown in Figure 3. Further, the use of said repulsion stepper motor may include the known multistage and overlapped type. Figures 4 to 6 show another embodiment and control circuits for it.

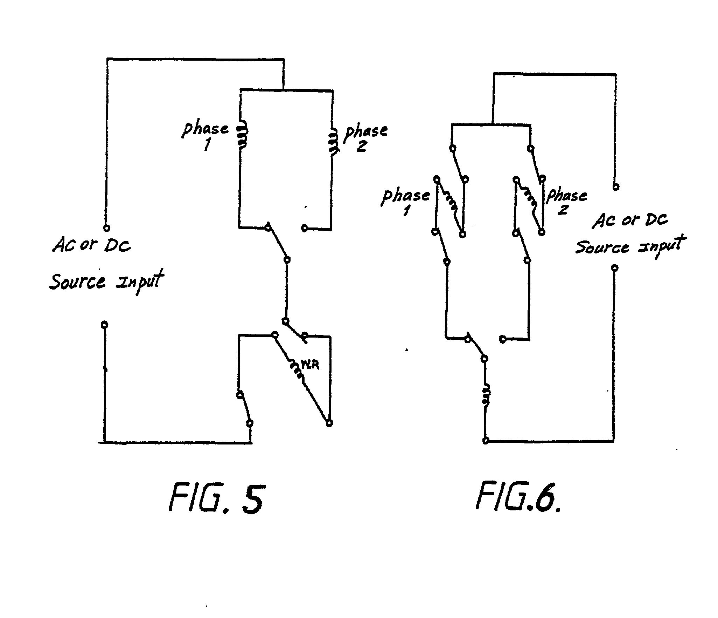

The motor shown in Figure 4 has a 4-pole stator and a 5-pole double-ended rotor. The rotor, as will be clear from the figure, is of generally dumb-bell shape, with a winding 4-6 on the central narrower part, fed from sliprings 4-2 via brushes 4-3. Figures 5 and 6 show embodiments of the invention which also could be operated from either an A.C. or a D.C. supply.

A motor according to the invention thus may comprise an A.C. stepper driving motor structure, which comprises:

1) A field having a selected number of poles, and having one or more than one set of excitation windings;

2) a rotor having a selected number of poles, and having one or more than one set of windings connected to the slip ring of the motor;

3) the related mechanical structure and brushes;

4) the polarity switching means, which may be an electromechanical means, a solid state electronic switch element such as Triac, or SCR and so on; and the stator winding and rotor winding of said AC stepper driving motor may be connected in series or parallel and the number of the poles between the stator and the rotor may be the same or may not; and the polarity switching means may sequentially change the opposite polarities of the rotor and stator; and the operation course of said AC stepper driving motor is to have the field becoming an unbalance state by means of switching the polarity switch for changing polarity so as to cause the rotor to rotate to a balanced point.

## Claims

1. A stepper motor operable from an A.C. or D.C. source and comprising a slip-ring rotor (1–6) and a stator (1–4), the windings (1–5) of each pair of opposite poles of the stator being connected in series with each other and with a switch (Q1, Q2, Q3), the circuit branches containing the windings with their switches being connected in parallel with one another and in series with the rotor winding (1–7), the switches being arranged to switch the current through the stator pole winding in series with, and reversibly in sense relative to the rotor current in sequential steps so as to cause the rotor to rotate in a clockwise or counterclockwise sense.

2. A stepper motor according to claim 1, in which the rotor has one pair of poles and switching means (Q4, Q5, Q6, Q7) are providing for reversing the polarity of the rotor winding.

3. A stepper motor according to claim 1, in which the rotor is multipolar, having a number of poles different from that of the stator.

## Patentansprüche

1. Schrittmotor, der von einer Wechselstrom- oder Gleichstromquelle betrieben werden kann, mit einem Schleifringrotor (1–6) und einem Stator (1–4), bei dem die Windungen von jedem Paar gegenüberliegender Pole des Stators in Reihe miteinander und mit einem Schalter (Q1, Q2, Q3) geschaltet sind, wobei die Schaltkreiszweige, die die Windungen mit ihren Schaltern enthalten, parallel zueinander und in Reihe mit der Rotorwindung (1–7) geschaltet sind, wobei die Schalter zum Schalten des Stromes durch die Statorpolwindung in aufeinanderfolgenden Schritten in Reihe mit und umkehrbar in der Richtung hinsichtlich des Rotorstroms angeordnet sind, derart, daß der Rotor veranlaßt wird, sich im Uhrzeigersinn oder im Gegenuhrzeigersinn zu drehen.

2. Schrittmotor nach Anspruch 1, bei dem der Rotor ein Polpaar aufweist und Schaltmittel (Q4, Q5, Q6, Q7) vorgesehen sind, um die Polarität der Rotorwindung umzukehren.

3. Schrittmotor nach Anspruch 1, bei dem der Rotor vielpolig mit einer Polzahl unterschiedlich von der des Stators ist.

## Revendications

1. Moteur pas-à-pas fonctionnant avec une source de courant alternatif ou de courant continu et comprenant un rotor (1–6) à bagues collectrices et un stator (1–4), les enroulements (1–5) de chaque paire de poles opposés du stator étant reliés en série l'un avec l'autre et avec un commutateur (Q1, Q2, Q3), les branches du circuit contenant les enroulements avec leurs commutateurs étant reliées en parallèles l'une avec l'autre et en série avec l'enroulement du rotor (1–7), les commutateurs étant disposés pour établir le courant au travers de l'enroulement polaire du stator en série avec, et réversiblement pour le sens par rapport au courant du rotor en pas séquentiels pour entraîner la rotation du rotor dans le sens des aiguilles d'une montre ou en sens contraire.

2. Moteur pas-à-pas selon la revendication 1, dans lequel le rotor possède deux poles et des moyens de commutation (Q4, Q5, Q6, Q7) sont prévus pour inverser la polarité de l'enroulement du rotor.

3. Moteur pas-à-pas selon la revendication 1, dans lequel le rotor est multipolaire, ayant un nombre de poles différent de celui du stator.

FIG.1

A-A

EP 0 207 298 B1

FIG.2

EP 0 207 298 B1

| CW ST \ SD | 0° | 60° | 120° | 180° | 240° | 300° | 0° | 60° | 120° |
|---|---|---|---|---|---|---|---|---|---|
| $Q_1$ | ON | | | ON | | | ON | | |
| $Q_2$ | | ON | | | ON | | | ON | |
| $Q_3$ | | | ON | | | ON | | | ON |
| $Q_4$ | | | | ON | ON | ON | | | |
| $Q_5$ | ON | ON | ON | | | | ON | ON | ON |
| $Q_6$ | ON | ON | ON | | | | ON | ON | ON |
| $Q_7$ | | | | ON | ON | ON | | | |

| CCW ST \ SD | 0° | 60° | 120° | 180° | 240° | 300° | 0° | 60° | 120° |
|---|---|---|---|---|---|---|---|---|---|
| $Q_1$ | ON | | | ON | | | ON | | |
| $Q_2$ | | ON | | | ON | | | ON | |
| $Q_3$ | | | ON | | | ON | | | ON |
| $Q_4$ | ON | ON | ON | | | | ON | ON | ON |
| $Q_5$ | | | | ON | ON | ON | | | |
| $Q_6$ | | | | ON | ON | ON | | | |
| $Q_7$ | ON | ON | ON | | | | ON | ON | ON |

SD: Step Degree.
ST: Step Time.

FIG.3.

Phase 2

Phase 1

Phase 1

Phase 2

4-3

4-4

4-1

4-2

4-5

4-6

4-5

FIG.4.

FIG. 5

FIG.6.